# EUROPEAN PATENT APPLICATION

(11) **EP 4 354 641 A1**
(43) Date of publication of application: **17.04.2024**
(21) Application number: 23193961.2
(22) Date of filing: 29.08.2023
(51) Int. Cl.: H01M 50/533, H01M 50/578, H01M 50/586, H01M 50/593

(54) **POWER STORAGE CELL AND CURRENT-INTERRUPTING METHOD FOR POWER STORAGE CELL**

(30) Priority: 14.10.2022 JP 2022165441
(71) Applicant: TOYOTA JIDOSHA KABUSHIKI KAISHA, Toyota-shi, Aichi-ken, 471 8571 (JP)
(72) Inventor: YAMAMOTO, Satomi, Toyota-shi, 471-8571 (JP); HAGA, Masayoshi, Toyota-shi, 471-8571 (JP); CHIHARA, Masashi, Toyota-shi, 471-8571 (JP); IKEDA, Takenori, Toyota-shi, 471-8571 (JP); KURASHITA, Nana, Toyota-shi, 471-8571 (JP)
(74) Representative: D Young & Co LLP

(57) **Abstract**

A power storage cell (1) comprises an electrode assembly (100) including a plurality of tabs (110P, 110N), a cell case (200), an external terminal (300), a connecting member (400), and an insulating member (500). The connecting member (400) has a current collector plate (410) connected to the plurality of tabs, and a connecting pin (420) connecting the current collector plate and the external terminal. The insulating member (500) includes an insulator (520) that has a shape surrounding the connecting pin and that insulates the connecting pin from the cell case. The connecting pin (420) has a covered portion (422) covered with the insulator, and the covered portion (422) has a fuse portion (422a).

## Description

### CROSS REFERENCE TO RELATED APPLICATIONS

This nonprovisional application is based on Japanese Patent Application No. 2022-165441 filed on October, 14, 2022, with the Japan Patent Office, the entire contents of which are hereby incorporated by reference.

### BACKGROUND

### Field

The present disclosure relates to a power storage cell and a current-interrupting method for a power storage cell.

### Description of the Background Art

Japanese Patent Laying-Open No. 2014-170735 discloses a secondary battery cell comprising an electrode assembly that charges and discharges with an electric current, a case that accommodates the electrode assembly and an electrolyte solution, a cap plate coupled to an opened portion of the case, an electrode terminal (a negative electrode terminal and a positive electrode terminal) mounted on the cap plate, and a lead tab (a negative electrode lead tab and a positive electrode lead tab) connecting the electrode terminal to the electrode assembly. The lead tab is provided with a cell fuse.

### SUMMARY

In the secondary battery cell disclosed by Japanese Patent Laying-Open No. 2014-170735, at the time when the fuse portion fuses, an arc can scatter and the arc can adhere to the electrode assembly and the like. This problem can be solved by covering the fuse portion with an insulating member, which, however, leads to an increase in the number of parts.

An object of the present disclosure is to provide a power storage cell, as well as a current-interrupting method for a power storage cell, both of which make it possible to enhance safety at the time of fusing of a fuse portion while avoiding an increase in the number of constituent members.

A power storage cell according to an aspect of the present disclosure comprises: an electrode assembly including a plurality of tabs; a cell case accommodating the electrode assembly; an external terminal secured to an upper surface of the cell case; a connecting member connecting the plurality of tabs and the external terminal; and an insulating member insulating the connecting member from the cell case, wherein the connecting member has a current collector plate connected to the plurality of tabs and a connecting pin connecting the current collector plate and the external terminal, the insulating member includes an insulator that has a shape surrounding the connecting pin and that insulates the connecting pin from the cell case, the connecting pin has a covered portion covered with the insulator, and the covered portion is provided with a fuse portion.

A current-interrupting method for a power storage cell according to an aspect of the present disclosure, wherein the power storage cell comprises an electrode assembly including a plurality of tabs, a cell case accommodating the electrode assembly, an external terminal secured to an upper surface of the cell case, a connecting member connecting the plurality of tabs and the external terminal, and an insulating member insulating the connecting member from the cell case, the connecting member has a current collector plate connected to the plurality of tabs and a connecting pin connecting the current collector plate and the external terminal, and the insulating member includes an insulator that has a shape surrounding the connecting pin and that insulates the connecting pin from the cell case, comprises:
at the time when an overcurrent flows between the electrode assembly and the external terminal, fusing a portion of the connecting pin covered with the insulator to interrupt the overcurrent.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage cell according to First Embodiment of the present disclosure.
Fig. 2 is an exploded perspective view of the power storage cell illustrated in Fig. 1.
Fig. 3 is a cross-sectional view of the power storage cell illustrated in Fig. 1.
Fig. 4 is an enlarged cross-sectional view of a positive electrode connecting pin and its surroundings.
Fig. 5 is an enlarged cross-sectional view of a negative electrode connecting pin and its surroundings.
Fig. 6 is a perspective view schematically illustrating a power storage cell according to Second Embodiment of the present disclosure.
Fig. 7 is an exploded perspective view of the power storage cell illustrated in Fig. 6.

### DESCRIPTION OF THE PREFERRED EMBODIMENTS

A description will be given of embodiments of the present disclosure, with reference to drawings. In the drawings referenced below, the same or equivalent members are denoted by the same numeral.

### (First Embodiment)

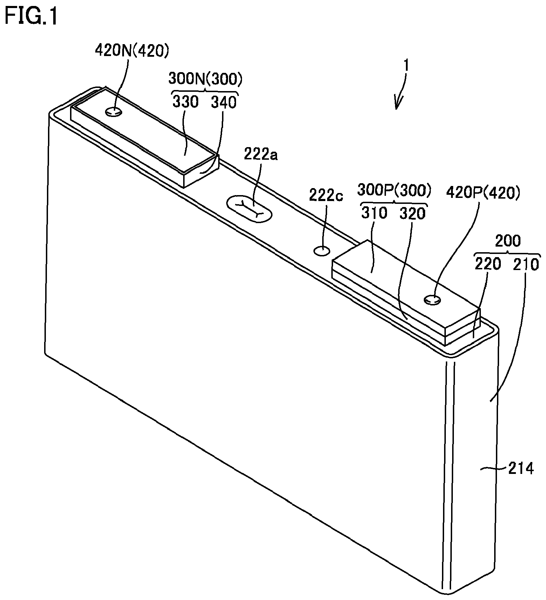

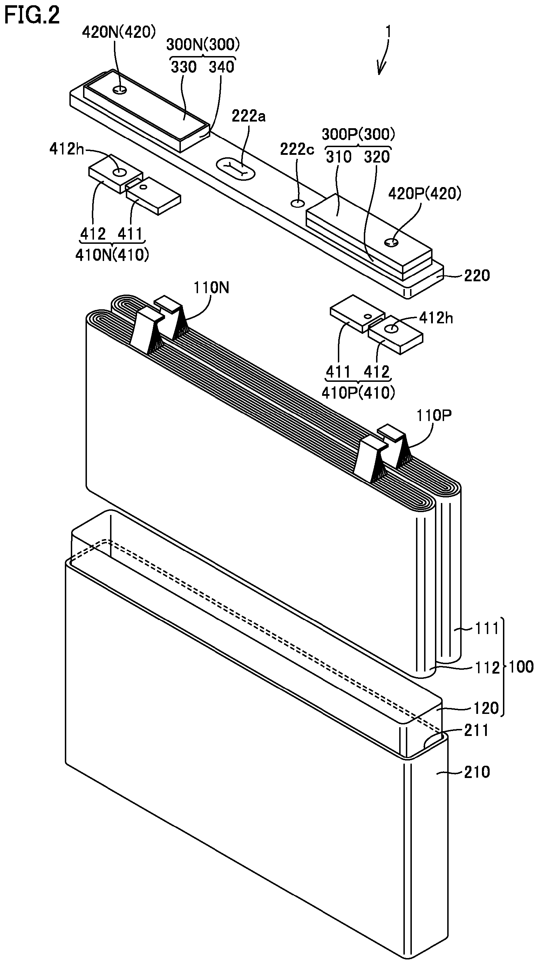

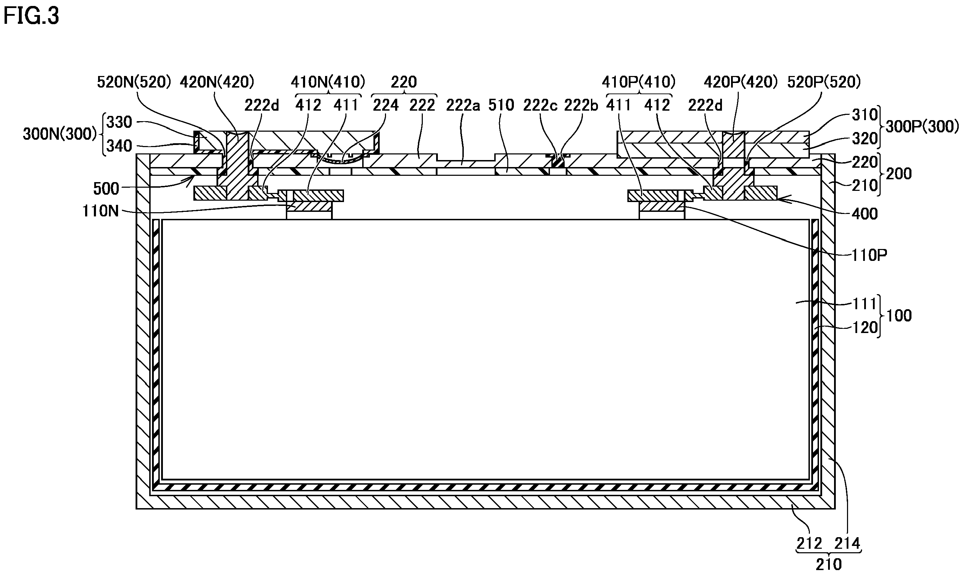

Fig. 1 is a perspective view schematically illustrating a power storage cell according to First Embodiment of the present disclosure. Fig. 2 is an exploded perspective view of the power storage cell illustrated in Fig. 1. Fig. 3 is a cross-sectional view of the power storage cell illustrated in Fig. 1.

As illustrated in Fig. 1 to Fig. 3, a power storage cell 1 comprises an electrode assembly 100, a cell case 200, an external terminal 300, a connecting member 400, and an insulating member 500.

Electrode assembly 100 has a plurality of unit electrode assemblies 111, 112 and an insulating film 120. In the present embodiment, the plurality of unit electrode assemblies comprise two unit electrode assemblies 111, 112. Each unit electrode assembly 111, 112 includes a plurality of tabs, namely, a plurality of positive electrode tabs 110P and a plurality of negative electrode tabs 110N. Unit electrode assemblies 111, 112 have the same structure. Hence, in the following, unit electrode assembly 111 will be described.

Unit electrode assembly 111 includes a positive electrode sheet, a separator, and a negative electrode sheet. Each of the positive electrode sheet, the negative electrode sheet, and the separator is formed in a long rectangular shape.

The positive electrode sheet includes a metal foil and a positive electrode composite material layer formed on the metal foil. The upper long side of the metal foil is provided with an uncoated portion to which the positive electrode composite material layer is not provided, and at this uncoated portion, the plurality of positive electrode tabs 110P are formed with some space between them.

The negative electrode sheet includes a metal foil and a negative electrode composite material layer formed on the metal foil. The upper long side of the metal foil is provided with an uncoated portion to which the negative electrode composite material layer is not provided, and at this uncoated portion, the plurality of negative electrode tabs 110N are formed with some space between them.

In a state where the sheets are wound in a roll, positive electrode tabs 110P are aligned in the thickness direction (the direction in Fig. 3 orthogonal to the surface of the paper), and negative electrode tabs 110N are aligned in the thickness direction. Positive electrode tab 110P and negative electrode tab 110N are spaced from each other in the width direction (the direction orthogonal to both the thickness direction and the height direction).

Insulating film 120 has a shape covering both the circumferential surface and the bottom surface of a set of the plurality of unit electrode assemblies 111, 112.

Cell case 200 accommodates electrode assembly 100. Cell case 200 also accommodates an electrolyte solution, which is not illustrated in the drawings. Cell case 200 is hermetically sealed. Cell case 200 has a case body 210 and a lid 220.

Case body 210 has an opening 211 that is open upward. Case body 210 is made of a metal such as aluminum. Case body 210 has a bottom wall 212 and a circumferential wall 214. Bottom wall 212 is formed in a rectangular flat shape. Circumferential wall 214 rises upward from bottom wall 212. Circumferential wall 214 is formed in a rectangular tubular shape. The length of circumferential wall 214 in the width direction is longer than the length of circumferential wall 214 in the thickness direction. The length of circumferential wall 214 in the height direction is longer than the length of circumferential wall 214 in the thickness direction.

Lid 220 closes opening 211 of case body 210. Lid 220 is connected to opening 211 by welding and/or the like. Lid 220 is formed in a flat shape. Lid 220 is made of a metal such as aluminum. Lid 220 has a lid body 222 and an invertible plate 224.

Lid body 222 is connected to case body 210 by welding and/or the like. Lid body 222 is provided with a pressure relief valve 222a, a liquid inlet hole 222b, a sealing member 222c, and a pair of pin-inserting holes 222d.

Pressure relief valve 222a is formed at the central portion of lid body 222. Pressure relief valve 222a is formed to break when the internal pressure of cell case 200 reaches a certain pressure or higher. When pressure relief valve 222a breaks, gas inside cell case 200 is released through pressure relief valve 222a to the outside of cell case 200, and thereby the internal pressure of cell case 200 decreases.

Liquid inlet hole 222b is a through hole through which the electrolyte solution is injected into cell case 200 during production of power storage cell 1.

Sealing member 222c is a member that seals liquid inlet hole 222b. Liquid inlet hole 222b is sealed by sealing member 222c after the electrolyte solution is injected into case body 210.

The pair of pin-inserting holes 222d are formed with some space between them in the width direction. Each pin-inserting hole 222d is a through hole through which a connecting pin 420 described below is inserted.

Invertible plate 224 is connected to lid body 222 by welding and/or the like. Invertible plate 224 has a shape that curves to protrude toward inside of lid body 222 from outside. When the internal pressure of cell case 200 reaches a certain pressure or higher, invertible plate 224 deforms into a shape that curves to protrude toward outside of cell case 200 from inside.

External terminal 300 is secured to the upper surface of cell case 200. To external terminal 300, a bus bar (which is not illustrated in the drawings) is connected by welding and/or the like. External terminal 300 has a positive electrode member 300P and a negative electrode member 300N.

Positive electrode member 300P is connected to the upper surface of cell case 200 by welding and/or the like. Positive electrode member 300P has a positive electrode terminal plate 310 and a terminal block 320.

Positive electrode terminal plate 310 is formed in the shape of a rectangular parallelepiped. Positive electrode terminal plate 310 is made of a metal such as aluminum.

Terminal block 320 is formed in the shape of a rectangular parallelepiped. Terminal block 320 is made of a metal (such as iron) that is different from the metal forming the positive electrode terminal plate 310. Terminal block 320 is connected to the upper surface of lid body 222 by welding, and to the upper surface of terminal block 320, positive electrode terminal plate 310 is connected by welding and/or the like. In other words, case body 210 and lid 220 are electrically connected to positive electrode terminal plate 310 with terminal block 320 being present therebetween, and are electrically charged with the same polarity as that of positive electrode terminal plate 310. Each of positive electrode terminal plate 310 and terminal block 320 is provided with a through hole through which a positive electrode connecting pin 420P described below is inserted.

Negative electrode member 300N is connected to the upper surface of cell case 200 by welding and/or the like. Negative electrode member 300N is spaced from positive electrode member 300P in the width direction. Negative electrode member 300N has a negative electrode terminal plate 330 and an insulating plate 340.

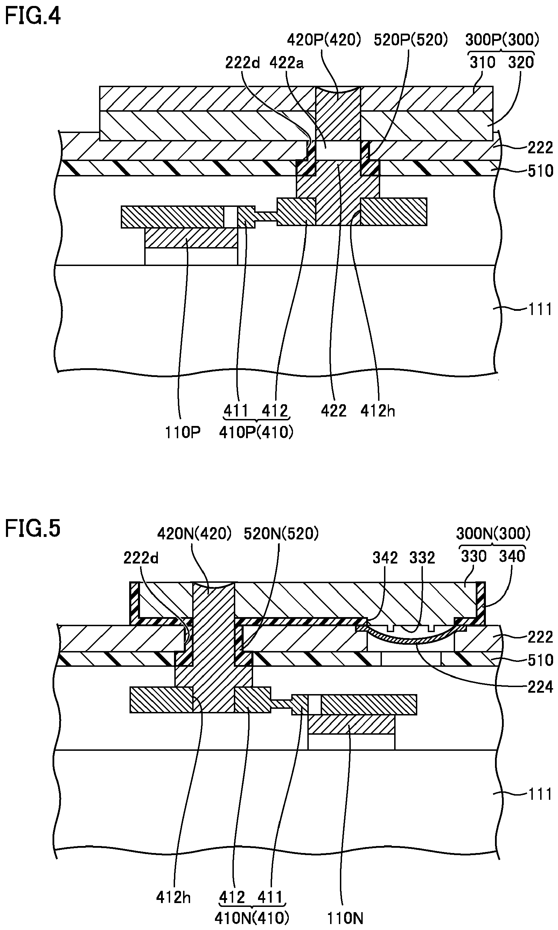

Negative electrode terminal plate 330 is formed in the shape of a substantial rectangular parallelepiped. Negative electrode terminal plate 330 is placed above invertible plate 224. As illustrated in Fig. 5, negative electrode terminal plate 330 has a facing portion 332 facing invertible plate 224. When the internal pressure of cell case 200 is less than a certain pressure (namely, under normal circumstances), invertible plate 224 is spaced from facing portion 332.

Insulating plate 340 is secured to the upper surface of lid 220. Insulating plate 340 supports negative electrode terminal plate 330. Insulating plate 340 insulates lid 220 from negative electrode terminal plate 330. Each of negative electrode terminal plate 330 and insulating plate 340 is provided with a through hole through which a negative electrode connecting pin 420N described below is inserted. As illustrated in Fig. 3 and Fig. 5, insulating plate 340 has an exposure hole 342 through which facing portion 332 is exposed.

Connecting member 400 connects the plurality of tabs 110P, 110N and external terminal 300. Connecting member 400 has a current collector plate 410 and connecting pin 420.

Current collector plate 410 is connected to the plurality of tabs. Current collector plate 410 has a positive electrode current collector plate 410P and a negative electrode current collector plate 410N.

Positive electrode current collector plate 410P is connected to the plurality of positive electrode tabs 110P by welding and/or the like. Positive electrode current collector plate 410P has a first flat-plate portion 411 and a second flat-plate portion 412.

To first flat-plate portion 411, the plurality of positive electrode tabs 110P are connected by ultrasonic welding and/or the like. First flat-plate portion 411 is provided with a through hole. The plurality of positive electrode tabs 110P are connected to the lower surface of first flat-plate portion 411. Alternatively, the plurality of positive electrode tabs 110P may be connected to the upper surface of first flat-plate portion 411.

Second flat-plate portion 412 is placed on the outside of first flat-plate portion 411 in the width direction. Second flat-plate portion 412 is provided with a connecting hole 412h. As illustrated in Fig. 3, a thin portion may be formed between second flat-plate portion 412 and first flat-plate portion 411.

Negative electrode current collector plate 410N is connected to the plurality of negative electrode tabs 110N by welding and/or the like. The configuration of negative electrode current collector plate 410N is substantially the same as the configuration of positive electrode current collector plate 410P.

Connecting pin 420 connects current collector plate 410 and external terminal 300. Connecting pin 420 has positive electrode connecting pin 420P and negative electrode connecting pin 420N.

Positive electrode connecting pin 420P connects positive electrode current collector plate 410P and positive electrode terminal plate 310. Positive electrode connecting pin 420P is formed in a cylindrical shape. The lower end of positive electrode connecting pin 420P, in a state where it is inserted inside of connecting hole 412h, is connected to second flat-plate portion 412. The upper end of positive electrode connecting pin 420P is swaged to positive electrode terminal plate 310.

Negative electrode connecting pin 420N connects negative electrode current collector plate 410N and negative electrode terminal plate 330. Negative electrode connecting pin 420N is formed in a cylindrical shape. The lower end of negative electrode connecting pin 420N, in a state where it is inserted inside of connecting hole 412h, is connected to second flat-plate portion 412. The upper end of negative electrode connecting pin 420N is swaged to negative electrode terminal plate 330.

Insulating member 500 insulates connecting member 400 from cell case 200. Insulating member 500 has an insulating sheet 510 and an insulator 520.

Insulating sheet 510 is connected to the lower surface of lid body 222. Insulating sheet 510 is provided with through holes at a portion overlapping pressure relief valve 222a, a portion overlapping liquid inlet hole 222b, a portion overlapping each pin-inserting hole 222d, and a portion overlapping invertible plate 224 (in each case, the portion in question overlaps in the height direction).

Insulator 520 has a shape surrounding connecting pin 420, and insulates connecting pin 420 from cell case 200. Insulator 520 has a positive-electrode-side insulator 520P and a negative-electrode-side insulator 520N.

Positive-electrode-side insulator 520P covers positive electrode connecting pin 420P. Positive-electrode-side insulator 520P is formed in a round tubular shape. Positive-electrode-side insulator 520P insulates positive electrode connecting pin 420P from lid body 222. Positive electrode connecting pin 420P has a covered portion 422 covered with positive-electrode-side insulator 520P. As illustrated in Fig. 3 and Fig. 4, covered portion 422 is provided with a fuse portion 422a. In the present embodiment, fuse portion 422a is constituted of a through hole penetrating through positive electrode connecting pin 420P. This through hole penetrates positive electrode connecting pin 420P in the direction orthogonal to the axial direction. Alternatively, fuse portion 422a may be constituted of a constriction.

Negative-electrode-side insulator 520N covers negative electrode connecting pin 420N. The structure of negative-electrode-side insulator 520N is the same as the structure of positive-electrode-side insulator 520P.

In power storage cell 1 as describe above, when the internal pressure of cell case 200 rises to reach the above-mentioned certain pressure or higher due to an occurrence of an abnormality of electrode assembly 100, invertible plate 224 is inverted (namely, it deforms into a shape that curves to protrude upward) and thereby comes into contact with facing portion 332 of negative electrode terminal plate 330. By this, external terminal 300, connecting member 400, and electrode assembly 100 together form a closed circuit with lid 220 being present therebetween, causing a flow of a high electric current in the circuit. Then, fuse portion 422a provided to positive electrode connecting pin 420P fuses. As a result, electric connection between electrode assembly 100 and cell case 200 is interrupted.

At the time of fusing of fuse portion 422a, arc can be generated; however, in power storage cell 1 according to the present embodiment, positive-electrode-side insulator 520P that insulates positive electrode connecting pin 420P from cell case 200 covers fuse portion 422a, and thereby scattering of arc that can occur at the time of fusing of fuse portion 422a is reduced. In other words, in power storage cell 1, positive-electrode-side insulator 520P has function to insulate positive electrode connecting pin 420P from cell case 200, as well as function to reduce scattering of arc at the time of fusing of fuse portion 422a. This makes it possible to enhance safety at the time of fusing of fuse portion 422a while avoiding an increase in the number of constituent members.

Further, as compared to a case where fuse portion 422a is provided to current collector plate 410, the distance between fuse portion 422a and electrode assembly 100 is large, which more reliably inhibits the arc from coming into contact with electrode assembly 100.

The fuse portion may be provided to a portion of negative electrode connecting pin 420N that is covered with negative-electrode-side insulator 520N.

### (Second Embodiment)

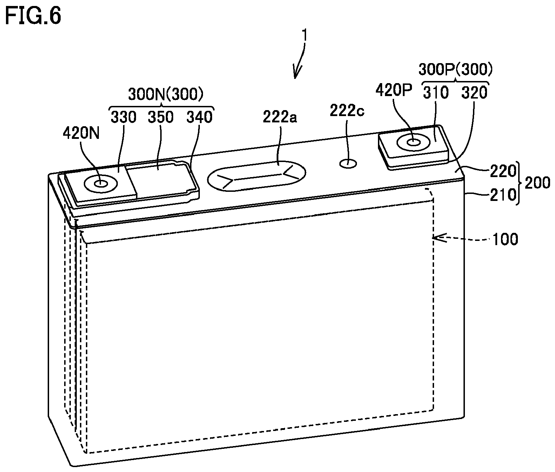

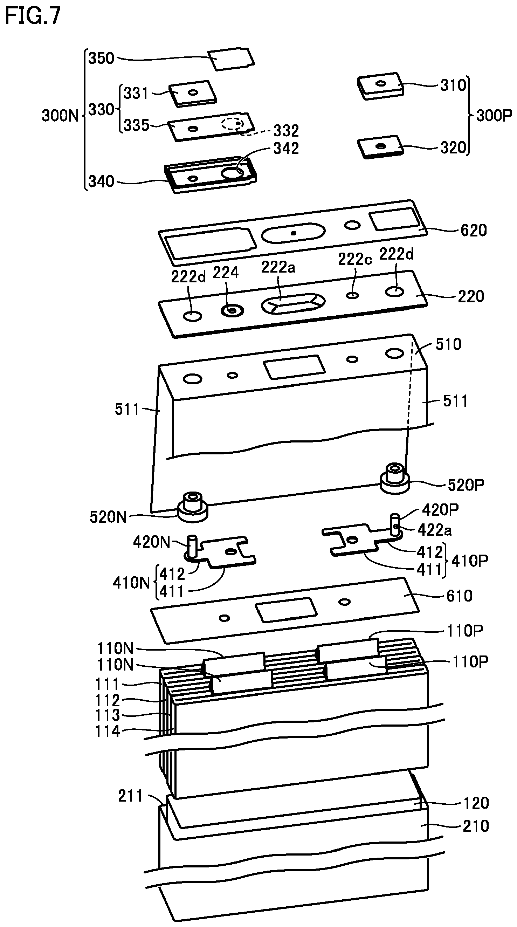

Next, with reference to Fig. 6 and Fig. 7, power storage cell 1 according to Second Embodiment of the present disclosure will be described. The below description of Second Embodiment only explains about the parts that are different from First Embodiment, and explanation of the same structure, action, and effect as in First Embodiment will not be repeated.

Power storage cell 1 according to the present embodiment further comprises an inner insulator 610 and an outer insulator 620.

Inner insulator 610 is placed inside cell case 200. More specifically, inner insulator 610 is interposed between electrode assembly 100 and current collector plate 410. Each of positive electrode tab 110P and negative electrode tab 110N is connected to current collector plate 410 at a position above inner insulator 610. Inner insulator 610 is provided with a through hole, at a portion that overlaps the through hole of first flat-plate portion 411 in the height direction. In the present embodiment, as illustrated in Fig. 7, electrode assembly 100 has four unit electrode assemblies 111 to 114.

Outer insulator 620 is placed on the outside of cell case 200. More specifically, outer insulator 620 is placed on the upper surface of lid 220. Outer insulator 620 is provided with through holes, at a portion overlapping positive electrode member 300P, a portion overlapping negative electrode member 300N, a portion overlapping pressure relief valve 222a, and a portion overlapping liquid inlet hole 222b (in each case, the portion in question overlaps in the height direction).

As illustrated in Fig. 7, insulating member 500 further has a pair of side sheets 511 connected to insulating sheet 510. Each side sheet 511 has a shape that extends downward from a thickness-direction edge of insulating sheet 510. Each side sheet 511 is interposed between a side of electrode assembly 100 and case body 210.

As illustrated in Fig. 6 and Fig. 7, negative electrode member 300N further has an insulating panel 350. Moreover, negative electrode terminal plate 330 has a terminal block 331 and an electrically-conductive plate 335. Electrically-conductive plate 335 is secured on insulating plate 340, and, to electrically-conductive plate 335, terminal block 331 is connected by welding and/or the like. Each of electrically-conductive plate 335 and terminal block 331 is provided with a through hole through which negative electrode connecting pin 420N is inserted. Electrically-conductive plate 335 has facing portion 332. Insulating panel 350 covers a portion of electrically-conductive plate 335 that is located above invertible plate 224.

A person skilled in the art will appreciate that the above-described example embodiments are specific examples of the following aspects.

### [Aspect 1]

A power storage cell comprising:
an electrode assembly including a plurality of tabs;
a cell case accommodating the electrode assembly;
an external terminal secured to an upper surface of the cell case;
a connecting member connecting the plurality of tabs and the external terminal; and
an insulating member insulating the connecting member from the cell case, wherein
the connecting member has:
   a current collector plate connected to the plurality of tabs; and
   a connecting pin connecting the current collector plate and the external terminal,
the insulating member includes an insulator that has a shape surrounding the connecting pin and that insulates the connecting pin from the cell case,
the connecting pin has a covered portion covered with the insulator, and
the covered portion is provided with a fuse portion.

In this power storage cell, the insulator insulates the connecting pin from the cell case, and thereby scattering of arc that can occur at the time of fusing of the fuse portion is reduced. In other words, in this power storage cell, the insulator has function to insulate the connecting pin from the cell case, as well as function to reduce scattering of arc at the time of fusing of the fuse portion. This makes it possible to enhance safety at the time of fusing of the fuse portion while avoiding an increase in the number of constituent members.

### [Aspect 2]

The power storage cell according to Aspect 1, wherein the connecting pin is swaged to the external terminal.

This aspect reduces falling of the connecting pin at the time of fusing of the fuse portion.

### [Aspect 3]

The power storage cell according to Aspect 1 or 2, wherein the fuse portion is constituted of a through hole formed to the connecting pin.

### [Aspect 4]

A current-interrupting method for a power storage cell, the power storage cell comprising an electrode assembly including a plurality of tabs, a cell case accommodating the electrode assembly, an external terminal secured to an upper surface of the cell case, a connecting member connecting the plurality of tabs and the external terminal, and an insulating member insulating the connecting member from the cell case, the connecting member having a current collector plate connected to the plurality of tabs and a connecting pin connecting the current collector plate and the external terminal, the insulating member including an insulator that has a shape surrounding the connecting pin and that insulates the connecting pin from the cell case, the method comprising:
at the time when an overcurrent flows between the electrode assembly and the external terminal, fusing a portion of the connecting pin covered with the insulator to interrupt the overcurrent.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A power storage cell (1) comprising:
an electrode assembly (100) including a plurality of tabs (110P, 110N);
a cell case (200) accommodating the electrode assembly;
an external terminal (300) secured to an upper surface of the cell case;
a connecting member (400) connecting the plurality of tabs and the external terminal; and
an insulating member (500) insulating the connecting member from the cell case, wherein
the connecting member (400) has:
a current collector plate (410) connected to the plurality of tabs; and
a connecting pin (420) connecting the current collector plate and the external terminal,
the insulating member (500) includes an insulator (520) that has a shape surrounding the connecting pin and that insulates the connecting pin from the cell case,
the connecting pin (420) has a covered portion (422) covered with the insulator, and
the covered portion is provided with a fuse portion (422a).

2. The power storage cell according to claim 1, wherein the connecting pin is swaged to the external terminal.

3. The power storage cell according to claim 1 or 2, wherein the fuse portion (422a) is constituted of a through hole formed to the connecting pin.

4. A current-interrupting method for a power storage cell (1), the power storage cell comprising an electrode assembly including a plurality of tabs (100), a cell case (200) accommodating the electrode assembly, an external terminal (300) secured to an upper surface of the cell case, a connecting member (400) connecting the plurality of tabs and the external terminal, and an insulating member (500) insulating the connecting member from the cell case, the connecting member having a current collector plate (410) connected to the plurality of tabs and a connecting pin (420) connecting the current collector plate and the external terminal, the insulating member including an insulator (520) that has a shape surrounding the connecting pin and that insulates the connecting pin from the cell case, the method comprising:
at the time when an overcurrent flows between the electrode assembly and the external terminal, fusing a portion of the connecting pin covered with the insulator to interrupt the overcurrent.
